# EUROPÄISCHE PATENTSCHRIFT

(11) **EP 1 236 555 B1**
(45) Veröffentlichungstag und Bekanntmachung des Hinweises auf die Patenterteilung: **14.04.2004**
(21) Anmeldenummer: 02003101.9
(22) Anmeldetag: 13.02.2002
(51) Int. Cl.: B29C 44/12, B29C 44/58, B60J 10/00, B60J 7/00

(54) **Werkzeug zum Anschäumen von Bauteilen an eine Scheibe für ein Kraftfahrzeug**
Tool for fitting a part on a vehicle glass using foaming material
Outillage pour la fixation d'une pièce sur une vitre de véhicule à l'aide de matériau expansible

(30) Priorität: 23.02.2001 DE 10109011
(43) Veröffentlichungstag der Anmeldung: 04.09.2002
(73) Patentinhaber: Webasto Vehicle Systems International GmbH, 82131 Stockdorf (DE)
(72) Erfinder: Sankt Johanser, Manfred, 86911 Diessen (DE)
(74) Vertreter: Wiese, Gerhard

(56) Entgegenhaltungen:
- DE-A- 19 844 204

## Beschreibung

Die vorliegende Erfindung betrifft ein Werkzeug zum Anschäumen von Bauteilen an eine Scheibe für ein Kraftfahrzeug, insbesondere an eine Fahrzeugdachscheibe, gemäß dem Oberbegriff von Anspruch 1.

Bei Werkzeugen zum Anschäumen von Bauteilen stellt sich das Problem, dass die Bauteile einerseits beim Schäumvorgang gehaltert werden müssen und anderseits im Halterungsbereich kein Schaum aus dem zu umschäumenden Bereich austreten soll. Es ist bei gattungsgemäßen Schäumwerkzeugen bekannt, zu diesem Zweck das Schäumwerkzeug mit eingebauten Gummidichtringen zu versehen, aufblasbare Abdichtelemente vorzusehen oder ausgefräste Ausnehmungen in dem Werkzeug vorzusehen, in welche Taschen aus Polyurethan eingesteckt werden, wobei die Bauteile in diese Elemente eingesteckt werden.

Nachteilig bei diesen Verfahren ist, dass einerseits beim Einstecken der Bauteile eine große Reibung auftreten kann, wodurch einerseits ein hoher Kraftaufwand erforderlich ist und andererseits ein Verspannen bzw. Verbiegen des Bauteils beim Einstecken auftreten kann, womit bei der Entformung nach dem Schäumvorgang im angeschäumten Material bleibende Deformationen auftreten können, was zu einem nachteiligen optischen Eindruck führt. Andererseits ist oft die Abdichtwirkung nicht hinreichend bzw. das Einstecken der Bauteile kann durch verbleibende Schaumreste in den Abdichtelementen unzuverlässig sein. Das Austauschen von verschlissenen Abdichtelementen ist aufwendig und die Lebensdauer der Abdichtelemente ist relativ gering. Bei aufblasbaren Abdichtelementen treten hohe Investitionskosten und ein großer erforderlicher Bauraum auf.

Es ist Aufgabe der vorliegenden Erfindung, ein Anschäumwerkzeug zu schaffen, welches ein einfaches und verschleißarmes Einstecken der anzuschäumenden Bauteile ermöglicht und außerdem für eine gute Abdichtwirkung sorgt, wobei ein spannungsfreies Umschäumen möglich sein soll und die Werkzeugkosten gering gehalten werden.

Diese Aufgabe wird erfindungsgemäß gelöst durch ein Werkzeug, wie es in Anspruch 1 definiert ist.

Bei dieser erfindungsgemäßen Lösung ist vorteilhaft, dass die Bauteile schnell, reibungsarm und verspannungsfrei eingesteckt werden können, dennoch eine sehr hohe Dichtwirkung bezüglich des Schäumungsmaterials erzielt wird, eine lange Lebensdauer der Werkzeugkomponenten erzielt wird, die Maße beim Einschäumen in prozesssicherer Weise eingehalten werden können und die Werkzeugkosten gering gehalten werden, wobei insbesondere ohne weitere Umbauten Werkzeuge verwendet werden können, die mit einer Ausfräsung für herkömmliche Polyurethan-Taschen versehen sind. Ferner ist der Bauraumbedarf wesentlich geringer als bei aufblasbaren Polyurethan-Taschen.

Bevorzugte Ausgestaltungen der Erfindung ergeben sich aus den Unteransprüchen.

Im folgenden wird die Erfindung anhand der beigefügten Zeichnungen beispielhaft näher erläutert. Es zeigen:
- Fig. 1: eine schematische Ansicht eines Teils eines erfindungsgemäßen Formwerkzeugs, teilweise in Schnittansicht; und
- Fig. 2: eine Schnittansicht entlang der Linie I-I von Fig. 1.

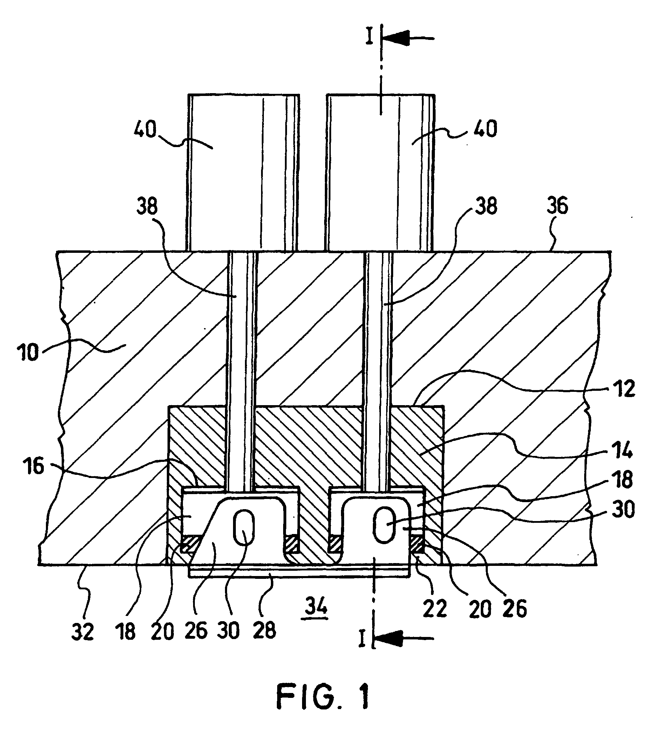

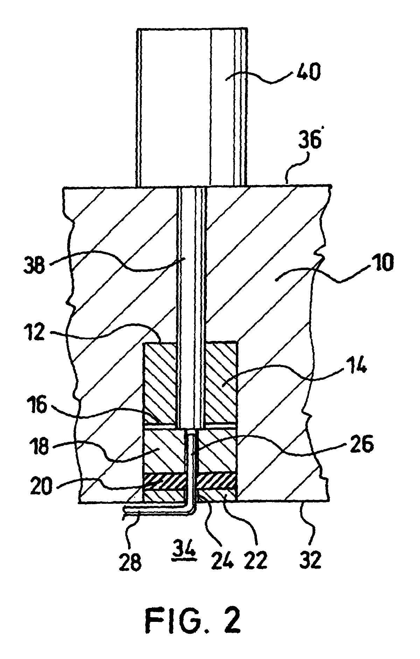

Gemäß Fig. 1 und 2 ist ein Schäumwerkzeug 10 mit einer ausgefrästen Ausnehmung 12 versehen, in welche ein vorzugsweise aus Stahl gefertigter Einsatz 14 eingepasst und beispielsweise mittels Schrauben befestigt ist. Bei der Ausnehmung 12 kann es sich um eine Ausnehmung handeln, wie sie für die üblicherweise bei Schäumwerkzeugen verwendeten Polyurethan-Taschen vorgesehen sind. Auf diese Weise können bestehende Werkzeuge ohne weiteres entsprechend umgebaut werden.

Der Einsatz 14 weist zwei Ausnehmungen 16 auf, in welchen jeweils ein Anpresselement 18 sowie ein Dichtungsring 20 vorgesehen sind. An seinem unteren Ende weist der Einsatz 14 einen Boden 22 auf, welcher im Bereich der Ausnehmungen 16 jeweils mit einer Öffnung 24 versehen ist, die jeweils zum Einstecken eines hervorstehenden Endes 26 eines Haltewinkels 28 ausgebildet ist. Die Dichtungsringe 20 sind vorzugsweise aus Weichgummi gefertigt und umgeben jeweils die Einstecköffnung 24 des Bodens 22. Die Abmessung der zentralen Öffnung der Dichtungsringe 20 ist so gewählt, dass das einzusteckende Ende 26 des Haltewinkels 28 bei nicht auf dem Dichtungsring 20 aufliegenden Anpresselement 18 im wesentlichen reibungsfrei und verspannungsfrei durch den Dichtungsring 20 hindurch gesteckt werden kann.

Der Haltewinkel 28 ist zum Anschäumen an einer Glas- oder Kunststoffscheibe für ein öffnungsfähiges Fahrzeugdach vorgesehen. Im angeschäumten Zustand dient der Haltewinkel 28 beispielsweise als Befestigungselement für die Dachscheibe an einer entsprechenden Verstellmechanik, wobei zu diesem Zweck die Öffnungen 30 in dem Haltewinkel vorgesehen sind, oder als Halter für Führungsschuhe, mittels welchen die Scheibe in dachfesten Führungsschienen geführt werden kann.

Das dargestellte Werkzeug 10 bildet das Oberwerkzeug einer Schäumwerkzeuganordnung, welche ferner ein entsprechendes Unterwerkzeug umfasst (nicht dargestellt), wobei das Oberwerkzeug 10 bezüglich des Unterwerkzeugs in vertikaler Richtung verstellbar ist, um ein Einlegen der Scheibe in die Werkzeuganordnung zu ermöglichen. Das Oberwerkzeug 10 und das Unterwerkzeug wirken zusammen, um einen zu umschäumenden Bereich der Scheibe zu umgrenzen bzw. festzulegen. Üblicherweise wird die Scheibe nur im Randbereich umschäumt. Als Schäummaterial wird vorzugsweise Polyurethan verwendet. Der zu umschäumende Bereich beginnt in Fig. 1 und 2 unterhalb der Unterkante 32 des Oberwerkzeugs 10 bzw. unterhalb des Bodens 22 des Einsatzes 14 und ist mit dem Bezugszeichen 34 bezeichnet. Die Oberkante des Oberwerkzeugs 10 ist mit dem Bezugszeichen 36 bezeichnet.

Die beiden Anpresselemente 18 sind vorzugsweise als Stahlringe ausgebildet und sind mittels einer Stange 38, welche von einem Antriebszylinder 40 angetrieben wird, in vertikaler Richtung verstellbar. Vor dem Einstecken des vom zu umschäumenden Bereichs abliegenden Ende 26 des Haltewinkels 28 werden die Anpresselemente 18 mittels der Zylinder 40 nach oben angehoben, so dass keine Kraft in vertikaler Richtung auf die Dichtungsringe 20 ausgeübt wird. Bei den Zylindem 40 kann es sich um Druckluftzylinder handeln. Nach dem Einstecken der Enden 26 des Haltewinkels 28 durch die Öffnung 24 bzw. durch den zentralen Bereich der Dichtungsringe 20 wird mittels der Zylinder 40 über die Stangen 38 jedes Anpresselement 18 nach unten gedrückt, wodurch die beiden Dichtungsringe 20 gegen den Boden 22 gedrückt werden und sich aufgrund der in vertikaler Richtung erfolgenden Kompression in horizontaler Richtung ausdehnen. Durch diese horizontale Ausdehnen kommen die Dichtungsringe 20 zur festen Anlage an den durchgesteckten Enden 26 des Haltewinkels 28, wodurch einerseits eine Fixierung des Haltewinkels 28 bezüglich des Oberwerkzeugs 10 erzielt wird und andererseits im Bereich der Dichtungsringe 20 eine Abdichtung an dem durchgesteckten Ende 26 bezüglich des umschäumten Bereichs 34 erzielt wird. Durch diese Abdichtwirkung wird das Umschäumungsmaterial am Verlassen des zu umschäumenden Bereichs 34 gehindert.

Statt an dem Oberwerkzeug kann der beschriebene Einsatz 14 auch an dem Unterwerkzeug vorgesehen sein. Dabei liegt der "Boden" des Einsatzes dann oben. Der Begriff "Boden" soll allgemein dahingehend verstanden werden, dass dies der Bereich des Einsatzes 14 ist, welcher den Einsatz 14 zum Umschäumungsbereich 34 hin abgrenzt.

Der wesentliche Aspekt der vorliegenden Erfindung ist darin zu sehen, dass ein elastischer Dichtungsring vorgesehen ist, dessen Ausdehnung und elastische Rückstellkraft in seitlicher Richtung mittels eines betätigbaren Anpresselements verändert werden kann, was einerseits ein einfaches, reibungsarmes und verspannungsfreies Einführen des von dem Umschäumungsbereich abgewandten Endes des zum Anschäumen vorgesehenen Bauteils ermöglicht und andererseits dennoch eine möglichst gute Abdichtwirkung erlaubt.

## Patentansprüche

1. Werkzeug zum Anschäumen von Bauteilen (28) an eine Scheibe für ein Kraftfahrzeug, welches mindestens einen Teil (32) der Begrenzung des zu umschäumenden Bereichs (34) bildet und einen Bereich (14) zum Haltern eines anzuschäumenden Bauteils aufweist, **dadurch gekennzeichnet, dass** der Bereich als starrer Einsatz (14) ausgebildet ist, welcher einen mit einer Öffnung (24) zum Einstecken des von dem Umschäumungsbereich (34) abgewandten Endes (26) des Bauteils (28) versehenen Boden (22), einen auf dem Boden liegenden und die Öffnung umschließenden elastische Dichtungsring (20) sowie ein Anpresselement (18) aufweist, welches betätigbar ist, um den Dichtring dergestalt gegen den Boden zu drücken, dass sich der Dichtungsring in seitlicher Richtung deformiert und zur dichtenden seitlichen Anlage an den durch die Öffnung gesteckten Teil des Bauteils kommt.

2. Werkzeug nach Anspruch 1, **dadurch gekennzeichnet, dass** der Einsatz (14) aus Metall, insbesondere Stahl, gefertigt ist.

3. Werkzeug nach Anspruch 1 oder 2, **dadurch gekennzeichnet, dass** der Dichtungsring (20)aus Weichgummi gefertigt ist.

4. Werkzeug nach einem der vorhergehenden Ansprüche, **dadurch gekennzeichnet, dass** der Dichtungsring (20) so ausgebildet ist, dass das Bauteil (28) ohne Verspannung des Dichtungsrings in die Öffnung (24) eingesteckt werden kann.

5. Werkzeug nach einem der vorhergehenden Ansprüche, **dadurch gekennzeichnet, dass** das Anpresselement (18) ringförmig ausgebildet ist.

6. Werkzeug nach Anspruch 5, **dadurch gekennzeichnet, dass** das Anpresselement als Stahlring (18) ausgebildet ist.

7. Werkzeug nach einem der vorhergehenden Ansprüche, **dadurch gekennzeichnet, dass** das Anpresselement (18) mittels eines Antriebszylinders (40), insbesondere eines Druckluftzylinders, betätigbar ist.

8. Werkzeug nach einem der vorhergehenden Ansprüche, **dadurch gekennzeichnet, dass** der Einsatz (14) in eine Ausnehmung (12) des Werkzeugs eingesetzt ist.

9. Werkzeug nach Anspruch 8, **dadurch gekennzeichnet, dass** die Ausnehmung (12) ausgefräst ist.

10. Werkzeug nach einem der vorhergehenden Ansprüche, **dadurch gekennzeichnet, dass** der Boden (22) des Einsatzes (14) mehrere Einstecköffnungen (24) aufweist, wobei für jede Öffnung ein eigener Dichtungsring (20) und ein eigenes Anpresselement (18) vorgesehen sind.

11. Werkzeug nach einem der vorhergehenden Ansprüche, **dadurch gekennzeichnet, dass** es sich bei der Scheibe um eines transparente Glas- oder Kunststoffscheibe für ein öffnungsfähiges Fahrzeugdach handelt.

12. Werkzeug nach Anspruch 11, **dadurch gekennzeichnet, dass** es sich bei dem Bauteil um einen Haltewinkel (28) für die Anbringung der Scheibe an einer Verstellmechanik handelt.

13. Werkzeug nach einem der vorhergehenden Ansprüche, **dadurch gekennzeichnet, dass** es sich bei dem Werkzeug um das Oberwerkzeug (10) einer Umschäumanordnung handelt.

## Claims

1. Tool for foaming components (28) onto a pane for a motor vehicle, the tool forming at least one part (32) of the boundary of the area (34) to be peripherally foamed, and having an area (14) for holding a component to be foamed on, **characterized in that** the area is formed as a rigid insert (14) which has a bottom (22) with an opening (24) for insertion of the end (26) of the component (28), the end (26) of the component (28) facing away from the peripheral foaming area (34), a resilient sealing ring (20) resting on the bottom of the rigid insert and surrounding the opening, and a pressure element (18) which can be actuated in order to press the sealing ring against the bottom such that the sealing ring is deformed in a lateral direction and is brought into tight lateral contact with the part of the component which has been inserted through the opening.

2. Tool according to Claim 1, **characterized in that** the insert (14) is made of metal, in particular steel.

3. Tool according to Claim 1 or 2, **characterized in that** the sealing ring (20) is made of soft rubber.

4. Tool according to one of the preceding claims, **characterized in that** the sealing ring (20) is formed in such a way that the component (28) can be inserted into the opening (24) without distorting the sealing ring.

5. Tool according to one of the preceding claims, **characterized in that** the pressure element (18) is annular.

6. Tool according to Claim 5, **characterized in that** the pressure element is formed as a steel ring (18).

7. Tool according to one of the preceding claims, **characterized in that** the pressure element (18) can be actuated by means of a drive cylinder (40), in particular a compressed air cylinder.

8. Tool according to one of the preceding claims, **characterized in that** the insert (14) is inserted into a recess (12) in the tool.

9. Tool according to Claim 8, **characterized in that** the recess (12) is milled out.

10. Tool according to one of the preceding claims, **characterized in that** the bottom (22) of the insert (14) has a plurality of insertion openings (24), a dedicated sealing ring (20) and a dedicated pressure element (18) being provided for each opening.

11. Tool according to one of the preceding claims, **characterized in that** the pane is a transparent glass or plastic pane for a vehicle roof that can be opened.

12. Tool according to Claim 11, **characterized in that** the component is a retaining angle (28) for attaching the pane to an adjustment mechanism.

13. Tool according to one of the preceding claims, **characterized in that** the tool is the upper tool (10) of a peripheral foaming arrangement.

## Revendications

1. Outillage pour la fixation par moussage de pièces (28) sur une vitre pour un véhicule automobile, lequel forme au moins une partie (32) de la délimitation de la zone (34) devant être entourée de mousse et présente une zone (14) pour le maintien d'une pièce devant être fixée par moussage, **caractérisé en ce que** la zone est réalisée en tant qu'insert (14) rigide, lequel présente un fond (22) avec une ouverture (24) pour l'insertion de l'extrémité (26) de la pièce (28) opposée à la zone entourée de mousse (34), une bague d'étanchéité (20) élastique reposant sur le fond et entourant l'ouverture, ainsi qu'un élément de pression (18) lequel peut être actionné afin de presser la bague d'étanchéité sur le fond de manière à ce que la bague d'étanchéité se déforme en direction latérale et parvient en contact latéral d'étanchéité avec la partie de la pièce insérée à travers l'ouverture.

2. Outillage selon la revendication 1, **caractérisé en ce que** l'insert (14) est fabriqué en métal, en particulier en acier.

3. Outillage selon la revendication 1 ou 2, **caractérisé en ce que** la bague d'étanchéité (20) est fabriquée en caoutchouc mou.

4. Outillage selon l'une quelconque des revendications précédentes, **caractérisé en ce que** la bague d'étanchéité (20) est réalisée de manière à ce que la pièce (28) puisse être insérée dans l'ouverture (24) sans déformation de la bague d'étanchéité.

5. Outillage selon l'une quelconque des revendications précédentes, **caractérisé en ce que** l'élément de pression (18) est réalisé sous forme annulaire.

6. Outillage selon la revendication 5, **caractérisé en ce que** l'élément de pression est réalisé en bague d'acier (18).

7. Outillage selon l'une quelconque des revendications précédentes, **caractérisé en ce que** l'élément de pression (18) peut être actionné à l'aide d'un cylindre d'entraînement (40), en particulier d'un cylindre pneumatique.

8. Outillage selon l'une quelconque des revendications précédentes, **caractérisé en ce que** l'insert (14) est inséré dans un évidemment (12) de l'outillage.

9. Outillage selon la revendication 8, **caractérisé en ce que** l'évidemment (12) est fraisé.

10. Outillage selon l'une quelconque des revendications précédentes, **caractérisé en ce que** le fond (22) de l'insert (14) présente plusieurs ouvertures d'insertion (24), une bague d'étanchéité (20) propre et un élément de pression (18) propre étant prévus pour chaque ouverture.

11. Outillage selon l'une quelconque des revendications précédentes, **caractérisée en ce que** la vitre est une vitre transparente en verre ou en matière synthétique pour un toit de véhicule pouvant s'ouvrir.

12. Outillage selon la revendication 11, **caractérisé en ce que** la pièce est une cornière de maintien (28) pour la fixation de la vitre sur un mécanisme de réglage.

13. Outillage selon l'une quelconque des revendications précédentes, **caractérisé en ce que** l'outillage est l'outillage supérieur (10) d'un dispositif de moussage.
